# EUROPEAN PATENT SPECIFICATION

(11) **EP 2 688 728 B1**
(45) Date of publication and mention of the grant of the patent: **25.09.2019**
(21) Application number: 12712150.7
(22) Date of filing: 20.03.2012
(51) Int. Cl.: B29C 63/00, B29D 7/01, B32B 27/30, E06B 1/34

(54) **FLEXIBLE LAMINATE FILM**
FLEXIBLE VERBUNDFOLIE
FILM FLEXIBLE À LAMINER

(30) Priority: 25.03.2011 GB 201105049
(43) Date of publication of application: 29.01.2014
(73) Proprietor: Renolit Cramlington Limited, Cramlington, Northumberland NE23 8AQ (GB)
(72) Inventor: RUMMENS, François, B-1082 Bruxelles (BE); LOTT, Martyn, Bedlington Northumberland NE22 6NS (GB); HAGLEY, Lydia, Belford Northumberland NE70 7QD (GB); MURRAY, Ian, Durham DH8 OHA (GB)
(74) Representative: Neilson, Martin Mark
(86) International application number: PCT/GB2012/050610
(87) International publication number: WO 2012/131328

(56) References cited:
- DE-A1- 4 032 139
- US-A- 4 169 180
- US-A1- 2002 164 490
- "Grafted Copolymers for Flexible Films with little or no Migration", PVC GRADES FOR MANUFACTURING OF FILM, 1 July 2007 (2007-07-01), pages 1-9, XP002676130, Ismaning
- N. BICAK ET AL: "Graft Copolymerization of Butyl Acrylate and 2-Ethyl Hexyl Acrylate from Labile Chlorines of Poly(vinyl chloride) by Atom Transfer Radical Polymerization", JOURNAL OF POLYMER SCIENCE: PART A - POLYMER CHEMISTRY, vol. 41, 2003, pages 3457-3462, XP002676131, New York
- THE EUROPEAN COUNCIL OF VINYL MANUFACTURERS: "The Power of Particles", PVC TODAY, 2009, - 2009, Brussels

## Description

The present invention relates to a flexible laminate film suitable for coating a substrate and to methods of manufacturing a flexible laminate film having a base layer and a UV protective layer.

uPVC based windows, doors, conservatories etc have become a cheaper and more durable alternative to wood based products. The uPVC profiles are typically white although pigments may be added to provide colour variations.

More recently, decorative effect PVC profiles have emerged as a second generation product designed to, in the case of wood grain, imitate natural wood products whilst having the advantageous physical and mechanical characteristics of PVC. Additionally, solid colours, textures and special effects have also been introduced to expand consumer choice. These "effect" uPVC profiles are typically created by laminating a thin, decorative, flexible, exterior grade film to the uPVC at the final stage of the profile manufacturing process prior to being fabricated into windows, doors and other construct elements..

Accordingly, such an exterior decorative film is continuously exposed to the environment and requires specific components within the formulation to withstand weathering and degradation over time. Typical films comprise a flexible, printed or unprinted p-PVC base onto which is laminated an acrylic protective film. The p-PVC base layer comprises additives such as stabilisers, processing aids and plasticisers which assist with the calendering process and prevent thermal degradation during manufacture and can include additives which offer additional protection during in situ exposure. Such additives are well known to those skilled in the art. The acrylic protective layer, commercially available from a number of sources typically contains UV absorber (s) and, in some cases, other additives which protect the base p-PVC layer from the UV component of the sun's radiation when in use. Throughout the lifetime of the product, these UV absorbers are consumed steadily, reducing the protection afforded to the base layer. Once fully depleted, the p-PVC base layer is fully exposed to UV radiation and degrades relatively rapidly. Accordingly, the longevity of the decorative effect, and accordingly the laminated product lifetime is determined to a large extent by the durability of the UV absorbers and additives in the outer protective layer in addition to the durability of the unprotected base film

Plasticizer migration can be defined as the movement of a plasticizer within and from a material, into or onto a substrate to which it is held in intimate contact. The rate and degree of this migration is dependent on environmental conditions in addition to the type of plasticizer used

With decorative laminate films of the described construction, plasticizers from the PVC layer can migrate into the acrylic, across the p-PVC/acrylic interface. This has the effect of reducing the Tg of the acrylic and thus increasing the mobility of the UV absorber(s). These migrate into the p-PVC until a natural equilibrium is reached, leaving the interface, and in its worst case, the whole acrylic film deficient in UV absorber thus reducing the lifetime of the film. This effect has been reduced, to a limited degree, by changing from monomeric to polymeric plasticisers. The increased molecular weight, and structure of the polymeric species reduces the diffusion properties of the plasticiser and ultimately migration of the UV absorber(s) from the outer layer. This approach has been incorporated into successive generations of exterior grade decorative films.

US 2002/0164490 discloses an acrylic resin film formed as a multilayer structure suitable for injection moulding and lamination for agricultural films, display films, paint-substrate films and the like. DE 4032139 discloses a composite multilayer film having a PVC base film that includes a monomeric plasthesiser, an intermediate layer of an acrylic resin and a cover layer of a polyacrylate. US 4,169,180 describes a laminate construction material comprising a synthetic resin base layer and a crosslinked acrylate protective layer for use as guttering systems, soffit and fascia systems, shutters, window casings and the like. PVC based extruded films are also described within "Grafted Copolymers for Flexible Films with little or no Migration", PVC GRADES FOR MANUFACTURING OF FILM, - July 2007 (2007-07), pages 1-9, Ismaning.

What is required however is an exterior grade film that may be manufactured conveniently whilst comprising enhanced weathering characteristics and in particular enhanced resistance to degradation from UV radiation.

Accordingly, the inventors provide a flexible, calenderable film exhibiting enhanced durability under external weathering conditions. The present film comprises predominantly a base layer of a graft copolymer of vinyl chloride on polyacrylate laminated with an acrylic based protective layer. The base layer of the present invention is devoid of any plasticiser components or comprises a significantly reduced amount of a plasticiser over conventional films.

The polyacrylate/PVC graft copolymer, when used as the main component of the base layer has been found to provide the necessary physical and mechanical characteristics associated with a flexible film to enable the base layer to be calendered under standard conditions known to those skilled in the art without requiring the addition of a plasticiser component.

Accordingly, the composite film is not subject to plasticiser and resulting UV absorber migration and has been found to exhibit enhanced durability under artificial accelerated weathering conditions. Furthermore, the copolymer component of the base layer, by enabling the complete omission (or inclusion of very low concentrations) of plasticizer increases the Tg of the base layer from approx 50°C for a conventionally plasticized film to 72°C. Typical in situ, profile temperatures of the laminated window or door are 50°C to 70°C and accordingly the base film of the present invention will remain below its Tg in its service lifetime, further inhibiting any potential UV absorber migration. Conventional plasticised base films comprising a Tg of approx. 50°C remain much more susceptible to migration between layers.

According to a first aspect of the present invention there is provided: a flexible laminate film for coating a substrate, the film comprising: predominantly a base layer; and an acrylic based UV protective layer comprising a UV absorber and laminated with the base layer; characterised in that: the base layer comprises a graft copolymer of a polyacrylate and PVC compositionally as a main component of the base layer.

Preferably, the film comprises predominantly the base layer relative to the acrylic based protective layer. The term 'predominantly' used within the specification relates to a volume and in particular a thickness of the base layer relative to the acrylic UV protective layer. Preferably, the base layer comprises a thickness greater than a thickness of the acrylic protective layer. Optionally, the thickness of the base layer at the substrate maybe approximately twice the thickness of the acrylic protective layer.

Preferably the base layer further comprises additional PVC to modify and optimise the physical properties of the final film for end use. A single molecular weight PVC or combinations of molecular weight PVC in numerous variations can be used to achieve this aim.

Preferably, the base layer further comprises a light stabiliser compound. Preferably, the base layer comprises at least one type of hindered amine light stabilizer (HALS). Preferably, the stabiliser compound is of the NOR HALS type. Preferably, the base layer further comprises a phenolic based antioxidant compound. Preferably, the base layer further comprises an amine scavenger compound. Preferably, the base layer is devoid of monomeric and/or polymeric plasticisers. Preferably the copolymer is 50:50 Polyacrylate:PVC.

Preferably, an unpigmented base layer comprises: 20% to 100%, 40% to 90% or more preferably 50% to 80% by weight of the copolymer; 0.1% to 4%, 0.3% to 3% or more preferably 0.5% to 2% by weight of a NOR HALS light stabiliser compound; 0% to 2%, 0.1% to 1.0% or more preferably 0.2% to 0.6% by weight of the phenolic based antioxidant compound; 0% to 2%, 0.2% to 1.5% or more preferably 0.3% to 1.0% by weight of the amine scavenger compound; wherein any remaining weight percent is made up by other materials identified herein including specifically, the copolymer and PVC.

Optionally, an unpigmented base layer may further comprise 0% to 70%, 10% to 50% or more preferably 20% to 30% by weight of PVC in addition to the copolymer. Optionally, in place of additional PVC incorporated in the base layer, alloyable acrylic based components may be added to further increase weathering resistance of the film.

Preferably, the base layer further comprises a thermal stabiliser compound. Preferably, the base layer further comprises an acrylic processing aid compound. Preferably, the base layer further comprises an epoxy stabiliser compound. Preferably, base layer further comprises an ester based lubricant compound. Preferably, the base layer further comprises an ester based light stabiliser compound.

The thermal stabiliser may be incorporated in an unpigmented base layer in the amount 2% to 10%, 3% to 8% or more preferably 4% to 7% by weight. The acrylic processing aid may be incorporated in an unpigmented base layer in the amount 1% to 10%, 2% to 7% or more preferably 2% to 5% by weight. Preferably, the epoxy stabiliser compound is incorporated in an unpigmented base layer in the amount 1% to 8%, 1% to 5% or more preferably 2% to 4% by weight. The ester based lubricant may be incorporated in an unpigmented base layer in the amount 0% to 1%, 0% to 0.5% or more preferably 0% to 0.2% by weight. Preferably, the ester based light stabiliser compound in an unpigmented base layer is incorporated in the amount 0% to 10%, 0% to 5% or more preferably 0% to 1% by weight.

Where the base layer comprises a thermal co-stabiliser being epoxy based, the stabiliser comprises epoxidised octyl stearate. The inventors have observed that incorporating such a small concentration of thermal stabiliser does not significantly increase migration of the UV absorber from the outer acrylic layer. That is, the epoxy stabiliser is incorporated in an unpigmented base layer at approximately 3% by weight. According to specific implementations an unpigmented base layer consists of the above mentioned components or consists essentially of such components where the sum of the components equals 100%.

Preferably, the graft copolymer of the base layer comprises Vinnolit® grade K707E available from Vinnolit GmbH and Co KG, Germany.

In addition the film will comprise pigments added to the premix formulation to achieve a desired colouration and impart additional weathering characteristics well known to those skilled in the art. Such pigments can be incorporated as raw pigments, pigment masterbatch, powder dispersions etc. Levels of addition and the effect on overall formulation percentages will depend on the form of addition, colourmetric and opacity requirements.

Optionally, the base layer is printed with a decorative design/pattern prior to lamination with the acrylic based UV protective layer wherein the decorative design/pattern is visible through the acrylic based UV protective layer.

Preferably, the UV protective layer comprises at least one type of UV absorber compound, and optionally a plurality of different types of compound, each compound capable of absorbing solar radiation of different wavelengths incident at the protective layer. Optionally, the acrylic based UV protective layer comprises a light stabiliser compound. Preferably, the UV protective layer comprises at least one type of HALS.

According to a second aspect of the present invention there is provided a window and/or frame comprising a film as described herein.

According to a third aspect of the present invention there is provided a door and/or door frame comprising a film as described herein.

According to a fourth aspect of the present invention there is provided a conservatory structural element comprising a film as described herein.

According to a fifth aspect of the present invention there is provided a building structural element comprising a film as described herein.

According to a sixth aspect of the present invention there is provided an architectural accessory comprising a film as described therein.

According to a seventh aspect of the present invention there is provided a method of manufacturing a flexible laminate film for coating a substrate comprising: forming a flexible base layer as a predominant component; and laminating the base layer with an acrylic based UV protective layer comprising a UV absorber to form a flexible laminate film; the base layer comprising a graft copolymer of a polyacrylate and PVC compositionally as a main component of the base layer.

Preferably, the base layer is a predominant component of the film relative to the acrylic based protective layer.

Reference within this specification to a 'structural element' includes PVC profiles used in the construction of a building or conservatory and the like and is not limited to an element that provides a structural effect by reinforcement or support for other components of the building or architectural structure, for example, roofline products, cladding, fascias and the like.

A specific implementation of the present invention will now be described by way of example only and with reference to the accompanying figures in which:
figure 1A shows weathering stages of a uPVC substrate coated with a prior art external grade laminate film having a standard plasticised formulation exposed to artificial weathering testing according to ISO 4892-2;
figure 1B shows weathering stages of a uPVC substrate coated with a laminate film according to the subject invention and exposed to the same artificial accelerated weathering testing of figure 1A according to ISO 4892-2;
figure 2 shows respective uPVC substrate samples after 6,000 hours exposure to artificial accelerated weathering testing according to ISO 4892-2 coated with i) a prior art plasticised base film without an acrylic based UV protective layer and ii) a plasticiser-free base film without an acrylic based UV protective layer following;
figure 3A is a microtome cross-section of a uPVC substrate coated with a prior art base layer plasticised with diisodecyl phthalate (DIDP) and laminated with an acrylic based UV protective layer prior to accelerated migration testing at 70°C, 100% humidity;
figure 3B is a microtome cross-section of the coated uPVC substrate of figure 3A exposed to three weeks of accelerated migration testing at 70°C, 100% humidity;
figure 3C is a microtome cross-section of the coated uPVC substrate of figure 3A exposed to six weeks of accelerated migration testing at 70°C, 100% humidity;
figure 4A is a microtome cross-section of a uPVC substrate coated with a prior art base layer plasticised with a polymeric plasticiser and laminated with an acrylic based UV protective layer prior to accelerated migration testing at 70°C, 100% humidity;
figure 4B is a microtome cross-section of the coated uPVC substrate of figure 4A exposed to three weeks of accelerated migration testing at 70°C, 100% humidity;
figure 4C is a microtome cross-section of the coated PVC substrate of figure 4A exposed to six weeks of accelerated migration testing at 70°C, 100% humidity;
figure 5A is a microtome cross-section of a uPVC coated substrate coated with a laminated plasticiser-free base layer and an acrylic based UV protective layer according to the subject invention prior to accelerated migration testing at 70°C, 100% humidity;
figure 5B is a microtome cross-section of the coated uPVC substrate of figure 5A exposed to three weeks of accelerated migration testing at 70°C, 100% humidity; and
figure 5C is a microtome cross-section of the coated uPVC substrate of figure 5A exposed to six weeks of accelerated migration testing at 70°C, 100% humidity.

To demonstrate the suitability and advantages of the films of the present invention, their physical and mechanical properties were tested and compared against conventional plasticised prior art films. A 120 micron thick base layer for an exterior grade film was prepared having the following formulation:

**Table 1: Base layer formulation of the present invention**

| **Raw Material** | **Supplier** | **Percentage by weight** |
|---|---|---|
| **Vinnolit K707E** | Vinnolit | 61.05 |
| Polyacrylate / PVC grafted co- polymer | | |
| **Tinuvin XT 833** | Ciba/BASF | 0.87 |
| NOR HALS light stabiliser | | |
| **ASM104** | Baerlocher | 0.44 |
| Theic - Amine scavenger | | |
| **Solvin 250SB** | Solvay | 24.42 |
| PVC resin K50 | | |
| **Reagens RA1774** | Reagens | 4.8 |
| Calcium /Zinc stabiliser | | |
| **Arenox A10** | Reagens | 0.26 |
| Hindered phenolic antioxidant | | |
| **Solvin 257RF** | Solvay | 1.74 |
| PVC resin K57 | | |
| **Paraloid K125** | Rohm and Haas | 3.31 |
| Acrylic Process aid | | |
| **Lankroflex ED6** | Lankro | 2.62 |
| Epoxy stabiliser | | |
| **2078 Lubricant** | E Chem | 0.052 |
| Complex Ester | | |
| **Mark LE98** | Lankro | 0.44 |
| Organo phosphite ester | | |

The film additionally included pigments added in the form of masterbatch to give a light oak appearance. The film was printed with a light oak design and laminated with a commercially available, 53 micron thick, acrylic, UV protective layer, for example, SD001, available from Kaneka Corporation, Japan.

Typical physical properties of such a film, as detailed in table 2, are such that the composite film can be processed on conventional lamination lines at the customer without any need for changes to process set up.

**Table 2: Physical properties of prior art and present laminate films**

| **Physical Property** | **Prior Art Film** | **Present Film** |
|---|---|---|
| Stress at 50% Elongation (N/mm²) | 17.1 (+/- 0.3) | 17.2 (+/- 0.5) |
| Tensile Strength (N/mm²) | 19.9 (+/- 0.7) | 19.1 (+/- 0.3) |
| Elongation at break (%) | 192 (+/- 20) | 208 (+/- 14) |

### Example 1

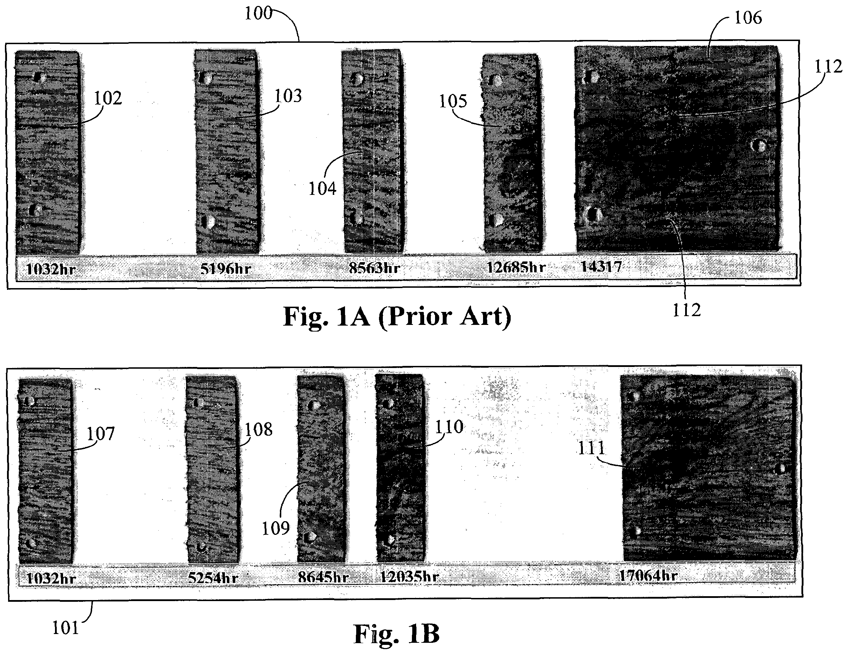

Referring to figures 1A and 1B, two coated uPVC profiles were prepared. Firstly, a pigmented base film of the present invention according to table 1 (figure 1B) and a similarly pigmented, plasticised base film of the prior art (figure 1A) were printed with a light oak design. The respective base layers were then laminated with a commercially available acrylic, UV protective layer and coated onto uPVC profiles. Accelerated weathering testing according to ISO 4892-2 was then undertaken using an Atlas Ci5000 Weather-Ometer.

As the UV absorber in the outer protective layer is consumed by the UV radiation, the underlying PVC base will eventually become exposed to the radiation and will scorch manifesting as 'burn spots'. The first appearance of burn spots was recorded and provides an early stage indication of failure of the protective outer layer.

Figure 1A shows the accelerated weathering results 100 for the prior art film at intervals 102 (1032 hours); 103 (5196 hours); 104 (8563 hours); 105 (12686 hours) and 106 (14317 hours). Referring to sample profile 106, burn spots 112 are clearly visible at numerous locations over the surface. Figure 1B illustrates the weathering results 101 for the same uPVC substrate coated with the present laminate film at intervals 107 (1038 hours); 108 (5254 hours); 109 (8645 hours); 110 (12035 hours) and 111 (17064 hours). As illustrated, profile 111 appears to be completely devoid of burn spots or visible degradation markings.

The performance of each film was measured quantitatively and qualitatively. Visual assessment was performed with the Grey Scale according to ISO 105-A02 and ISO 105-A03, techniques familiar to those skilled in the art. Industry standards for example, RAL-GZ 716/7, state that, after an exposure of 12GJ/m2 (equivalent to 6000hrs exposure), the colour change of the film after exposure must not be greater than grade 3 of the grey scale according to ISO 105-A02. Whilst both prior art and the present films clearly meet this minimum criteria, it is important that a more durable film does not exceed this colour change over its guaranteed life time whilst also maintaining its physical integrity.

Further visual observations were recorded in table 4 as remarks at each time interval for both films describing changes in colour and overall physical integrity.

**Table 4: Prior Art Film Under ISO4892-2 Testing**

| **Time (Hrs)** | **Ao2** | **A03** | **Remarks** |
|---|---|---|---|
| 1032 | 4/5 | 4/5+ | Slight loss of fine tone & dirty yellow cast, sample lighter, slightly glossy with an orange cast. Acrylic ok to E/M. Ok to microscope |
| 1732 | 4 | 4+ | Slight loss of print & tone & a loss of dirty cast, sample faded, clean & orange. Acrylic ok to E/M. ok to microscope |
| 2720 | 4 | 4+ | Slight loss of print & a loss of tone & dirty cast, sample faded, clean looking, glossy & orange. Acrylic ok to E/M. slight pitting to microscope |
| 3580 | 4- | 4+ | Loss of print, tone & dirty cast, sample very glossy, faded, clean looking & orange. Acrylic ok to E/M. very light pitting to microscope |
| 4280 | 4- | 4+ | Loss of print, tone & dirty cast, sample faded, clean looking, very glossy & orange. Acrylic ok to E/M. light pitting to microscope |
| 5196 | 4- | 4+ | Loss of print, tone & dirty cast, sample very glossy(glass like), faded, clean looking & orange. Acrylic has a very slight hazy look to E/M. pitting to microscope |
| 6058 | 4- | 4+ | Loss of print, tone, depth & dirty cast, sample faded, very glossy, clean looking & orange. Acrylic is slightly hazy with a slight orange peel effect to E/M. pitting to microscope |
| 6934 | 4- | 4+ | Loss of print, depth, tone & dirty cast, sample faded, clean looking, very, very glossy & orange. Acrylic is hazy with a slight orange peel effect to E/M. Pitting to microscope |
| 7777 | 4- | 4+ | Loss of print, depth, tone & dirty cast, sample faded, very very glossy, clean looking & orange. Acrylic is hazy with a slight orange peel effect to E/M. Pitting to microscope |
| 8563 | 4- | 4+ | Loss of print, tone, depth & dirty cast, sample faded, clean looking, very glossy(glass like) & orange. Acrylic has a slight hazy look & has a slight orange peel effect to E/M. Pitting to microscope |
| 9389 | 4- | 4+ | Loss of print, depth, tone & dirty cast, sample clean looking, very glossy(glass like), faded & orange. Acrylic is hazy with a slight orange peel effect to E/M. Pitting to microscope |
| 10253 | 4- | 4+ | Loss of print, depth, tone & dirty cast, sample faded, clean looking, very glossy(glass like) & orange. Acrylic is hazy with an orange peel effect to E/M. Pitting & a very slight burn mark to microscope |
| 1090 | 4- | 4+ | Loss of print, depth, tone & dirty cast, sample clean looking, faded, very glossy(glass like) & orange. Acrylic is hazy with an orange peel effect to E/M. Pitting & light blisters to microsope |
| 11834 | 4- | 4+ | Loss of print, tone, depth & dirty cast, sample faded, clean looking, very glossy & orange. Acrylic is hazy with an orange peel effect. **Light burn marks to E/M.** Pitting, blisters & burn marks to microscope |
| 12686 | 4- | 4+ | Loss of print, tone, depth & dirty cast, sample very clean looking, very glossy, faded & orange. Acrylic is hazy, has an orange peel effect. **Burn spots to E/M.** Pitting, blisters & burn marks to microscope |
| 13506 | 4- | 4+ | Loss of print, tone, depth & dirty cast, sample very clean looking, faded, glossy & orange. Acrylic has a hazy look, an orange peel effect. **Burn spots to E/M.** Pitting, blisters & burn marks to microscope |
| 14317 | 4- | 4+ | **DISCONTINUED, MULTIPLE BURN MARKS** |

**Table 5: Present Film Under ISO4892-2 Testing**

| **Time (Hrs)** | **Ao2** | **A03** | **Remarks** |
|---|---|---|---|
| 1038 | 4/5- | 4/5 | Loss of dirty cast & a loss of tone, sample slightly lighter, cleaner with an orange cast. Acrylic ok to E/M. ok to microscope |
| 1851 | 4+ | 4/5- | Loss of tone & dirty cast, sample lighter, cleaner with a yellow cast. Acrylic ok to E/M. very slight pitting to microscope |
| 2702 | 4+ | 4/5- | Loss of tone & dirty cast, sample cleaner, lighter with a yellow cast. Acrylic ok to E/M. Slight pitting to microscope |
| 3549 | 4+ | 4/5- | Loss of tone & dirty cast with a slight loss of print, sample lighter, clean looking with a yellow cast. Acrylic ok to E/M. Light pitting to microscope |
| 4354 | 4+ | 4/5- | Loss of tone & dirty cast with a slight loss of print, sample clean looking, lighter with a yellow cast. Acrylic has a very slight hazy look to E/M. Pitting to microscope |
| 5254 | 4+ | 4/5- | Loss of tone & dirty cast with a slight loss of print, sample lighter, clean looking with a yellow cast. Acrylic ok to E/M. Pitting to microscope |
| 6145 | 4+ | 4/5- | Loss of tone & dirty cast with a slight loss of print, sample lighter, very slightly more glossy, clean looking & yellow. Acrylic ok to E/M. Pitting to microscope |
| 6950 | 4+ | 4/5- | Loss of print, tone & dirty cast, sample clean looking, lighter, very slightly more glossier & yellow. Acrylic ok to E/M. Pitting to microscope |
| 7728 | 4+ | 4/5- | Loss of print, tone & dirty cast, sample clean looking, lighter, slightly glossier & yellow. Acrylic ok to E/M. Pitting to microscope |
| 8625 | 4+ | 4/5- | Loss of print, tone & dirty cast, sample lighter, clean looking & yellow. Acrylic ok to E/M. Pitting to microscope |
| 9518 | 4 | 4+ | Loss of print, tone & dirty cast, sample clean looking, faded & yellow. Acrylic ok to E/M. Pitting to microscope |
| 10385 | 4 | 4+ | Loss of print, tone & dirty cast, sample faded, clean looking & yellow. Acrylic ok to E/M. Pitting to microscope. |
| 11216 | 4 | 4+ | Loss of print, tone & dirty cast, sample clean looking, faded & yellow. Acrylic ok to E/M. Pitting to microscope |
| 12035 | 4 | 4+ | Loss of print, tone & dirty cast, sample faded, clean looking & yellow. Acrylic ok to E/M. Pitting to microscope |
| 12873 | 4 | 4+ | Loss of print, tone & dirty cast, sample clean looking, faded & yellow. Acrylic ok to E/M. Pitting to microscope |
| 13723 | 4- | 4+ | Loss of print, tone, depth & dirty cast, sample faded, clean looking & yellow. Acrylic is slightly hazy to E/M. Pitting to microscope |
| 14528 | 4- | 4+ | Loss of print, tone, depth & dirty cast, sample clean looking, faded, slightly matt & yellow. Acrylic has a slight hazy look to E/M. Pitting to microscope |
| 15363 | 4- | 4+ | Loss of print, tone, depth & dirty cast, sample faded, clean looking, slightly matt & yellow. Acrylic is slightly hazy to E/M. Pitting to microscope |
| 16095 | 3/4+ | 4+ | Loss of print, tone, depth & dirty cast, sample faded, very clean looking, matt & yellow. Acrylic is hazy to E/M. Pitting to microscope |
| 17064 | 3/4- | 4+ | Loss of print, tone, depth and dirty cast. Sample faded, very clean looking, matt and yellow. Acrylic is hazy to E/M. pitting to microscope. |

In tables 4 and 5, the first burn spot of the prior art film occurred at 11,834 hours. Complete failure through multiple burn marks 112 were observed at 14,317 hours. From table 5 and figure 1B, at 17084 hours it can be seen that no burn spots or any significant signs of degradation are present on the film of the subject invention.

Table 6 summarises the time intervals at which the first burn spots were observed and complete failure of the respective films.

**Table 6: ISO 4892-2 results summary**

| **Formulation** | **First burn spot (Hrs)** | **Discontinued due to acrylic failure (Hrs)** |
|---|---|---|
| **Standard** | 11834 | 14317 |
| **Invention** | OK AT 17064 | OK at 17034 |

The correlation between the ISO 4892-2 simulation and real time weathering for Northern Europe is 8000 hours of testing is approximately equivalent 10 years of outdoor exposure. Using the respective observed time periods for initial failure of the outer acrylic based UV protected layer, the present film provides an approximate 45% improvement of longevity over the plasticised films of the prior art. According to the ISO 4892-2 test results, the present film integrity is maintained for at least an additional 6.5 years over that of the prior art according to the ISO 4892-2 test performance.

### Example 2

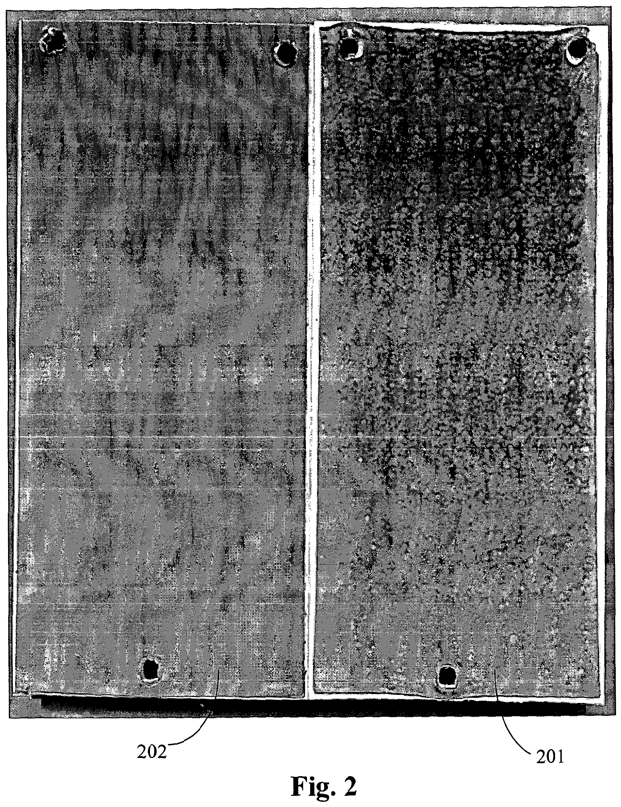

To assess the durability of the present, pigmented, unprinted, base film without a UV protective layer, accelerated weathering testing according to ISO4892-2 was undertaken and compared with a conventional, plasticized, similarly pigmented base film of the prior art. The results are shown in figure 2 and the general appearance of the two base layers recorded in table 3

Assessment of the base layer films was made at regular intervals purely by observing the point at which visible degradation commenced. As shown in table 3, burn spots were observed for the prior art base layer around 4,450 hours with further degradation occurring subsequently. In contrast, the present base film of table 1 exhibited no visible signs of degradation up to 6,000 hours exposure.

**Table 3: General Appearance of Test Films**

| Test Duration (Hrs) | Prior Art Plasticised Formulation | Present Plasticiser-Free Film |
|---|---|---|
| 1018 | OK | OK |
| 1904 | OK | OK |
| 2824 | OK | OK |
| 3622 | OK | OK |
| 4450 | Burn spots visible to naked eye | OK |
| 5268 | Multiple burn spots | OK |
| 5934 | Multiple burn spots (Discontinued) | OK |

Referring to figure 2, the present base film 202 shows no signs of surface degradation in contrast to the prior art film 201.

### Example 3

A plasticiser/UV absorber migration study was undertaken on a laminate film of the subject invention and two prior art laminate films containing different plasticisers. All three films were exposed to 70°C, 100% humidity for 3 and 6 weeks.

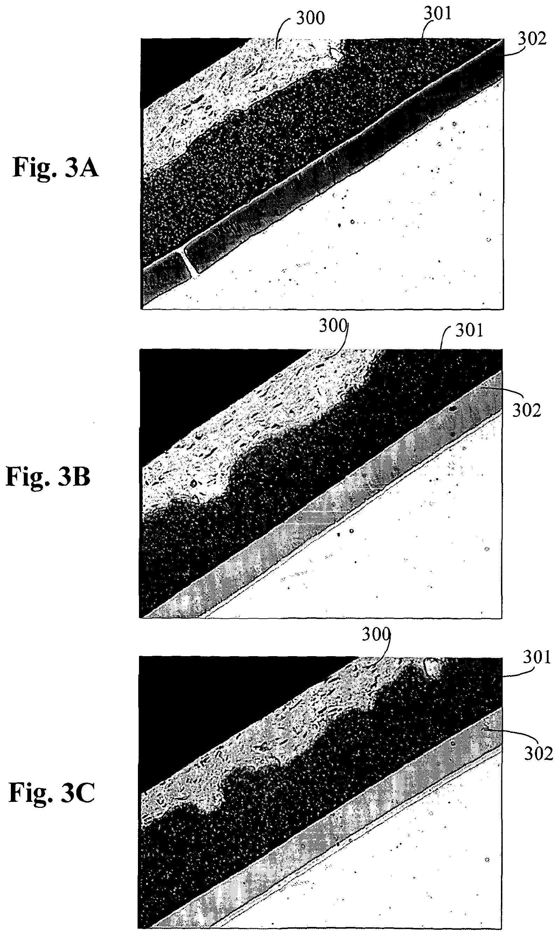

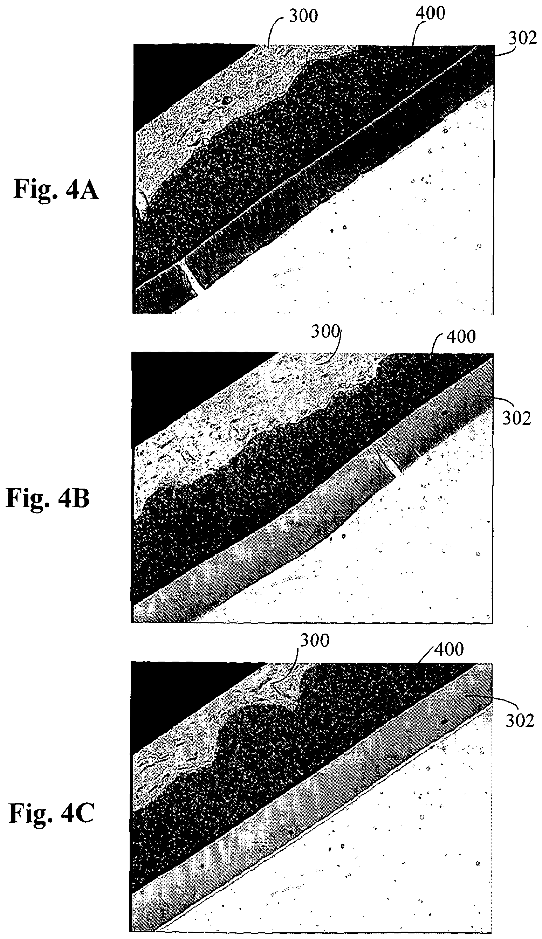

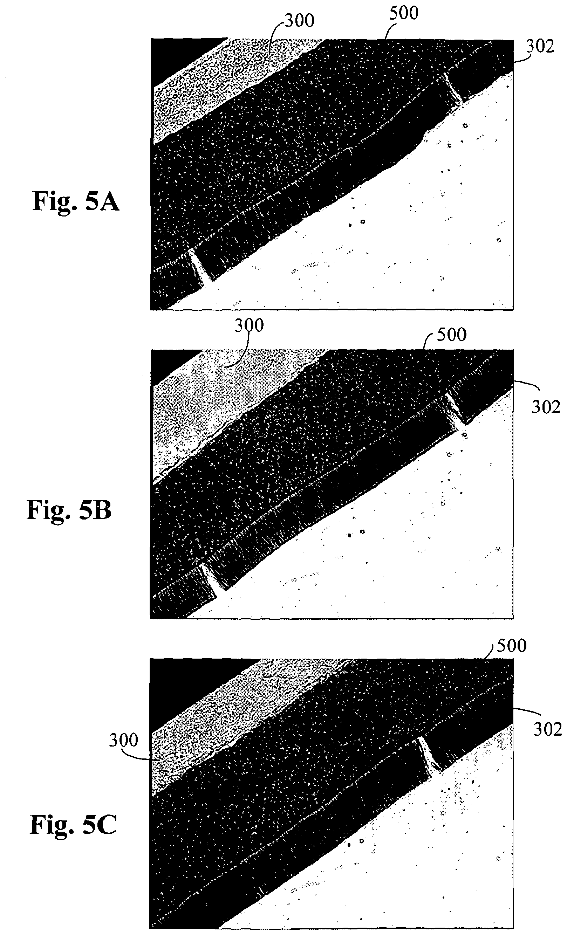

The base layer of table 1, pigmented to give a light brown appearance, was printed with a light oak design and laminated with a commercially available acrylic as with example 1. The composite film was then coated onto a uPVC profile. Conventional prior art films, similarly pigmented printed with the same light oak design and laminated with the same commercially available acrylic but plasticized with DIDP and a polymeric plasticizer were also coated onto respective uPVC profiles. The migration results for the film of the subject invention are shown in figures 5A to 5C. The results for the DIDP plasticized film are shown in figures 3A to 3C and the results for the polymeric plasticized film are shown in figures 4A to 4C.

Microtome cross sections of each sample were examined by UV microscopy in order to assess the relative degree of plasticizer/UV absorber migration. Figures 3A, 4A and 5A illustrate the three films prior to temperature and humidity testing; figures 3B, 4B and 5B illustrate the films after three weeks of temperature and humidity testing and figures 3C, 4C and 5C illustrate the films after six weeks of testing.

Figures 3A to 3C illustrate the uPVC profile (substrate) 300 coated with a prior art pPVC DIDP plasticised base film 301 and an acrylic containing UV absorber film 302. Figures 4A to 4C show the prior art film containing polymeric plasticiser 400 and figures 5A to 5C show the present plasticiser-free base layer 500. Where migration has occurred, areas of acrylic layer 302 would appear lighter indicating a depletion of the UV absorber when illuminated by a UV source. As can be seen from figures 3B, 3C, 4B and 4C, the DIDP and polymeric plasticised samples of the prior art exhibit lighter acrylic layers 302, particularly at the PVC/Acrylic interface, after three and six weeks of temperature and humidity testing. This confirms migration of the plasticiser from the base film 301, 400 into the acrylic layer 302 which in turn increases the mobility of the UV absorbers in the acrylic layer 302.

As shown in figures 5A to 5C, there is no or little loss in tone of the acrylic layer 302 confirming no or very little UV absorber mobility and migration across the PVC/acrylic interface.

## Claims

1. A flexible laminate film for coating a substrate (300), the film comprising:
predominantly a base layer (301); and
an acrylic based UV protective layer (302) comprising a UV absorber and laminated with the base layer (301);
**characterised in that**:
the base layer (301) comprises a graft copolymer of a polyacrylate and PVC compositionally as a main component of the base layer.

2. The film as claimed in claim 1 wherein the base layer (301) further comprises any one or a combination of the follow set of:
• additional PVC;
• a UV light stabiliser compound;
• a phenolic based antioxidant compound and a UV light stabiliser compound;
• an amine scavenger and a phenolic based antioxidant compound and a UV light stabiliser compound;
• a thermal stabiliser compound;
• an acrylic processing aid compound;
• an epoxy stabiliser compound;
• an ester based lubricant compound;
• an ester based light stabiliser compound.

3. The film as claimed in claim 2 wherein the base layer (301) is devoid of monomeric and/or polymeric plasticisers.

4. The film as claimed in claim 2 wherein the base layer (301), unpigmented, comprises:
• 50% to 80% by weight of the copolymer;
• 0.5% to 2% by weight of the UV light stabiliser compound;
• 0.2% to 0.6% by weight of the phenolic based antioxidant compound;
• 0.3% to 1.0% by weight of the amine scavenger compound.

5. The film as claimed in claim 4 wherein the base layer (301) further comprises 20% to 30% by weight of PVC in addition to the copolymer.

6. The film as claimed in any preceding claim wherein the acrylic based UV protective layer (302) further comprises a plurality of different UV absorber compounds.

7. The film as claimed in any preceding claim wherein the acrylic based UV protective layer (302) further comprises at least one type of hindered amine light stabilizer (HALS) compound.

8. The film as claimed in any preceding claim wherein the base layer (301) further comprises a printed design or pattern visible through the acrylic based UV protective layer (302).

9. The film as claimed in any preceding claim wherein a thickness of the base layer (301) is greater than a thickness of the acrylic based protective layer (302).

10. A window and/or frame comprising a film according to any one of claims 1 to 9.

11. A door and/or door frame comprising a film according to any one of claims 1 to 9.

12. A conservatory structural element comprising a film according to any one of claims 1 to 9.

13. A building structural element comprising a film according to any one of claims 1 to 9.

14. An architectural accessory comprising a film according to any one of claims 1 to 9.

15. A method of manufacturing a flexible laminate film for coating a substrate (300) comprising:
forming a flexible base layer (301) as a predominant component; and
laminating the base layer (301) with an acrylic based UV protective layer (302) comprising a UV absorber to form a flexible laminate film;
the base layer (301) comprising a graft co-polymer of a polyacrylate and PVC compositionally as a main component of the base layer.

## Patentansprüche

1. Flexible Verbundfolie zur Beschichtung eines Substrats (300), wobei die Folie umfasst:
überwiegend eine Basisschicht (301); und
eine UV-Schutzschicht (302) auf Acrylbasis, umfassend einen UV-Absorber und mit der Basisschicht (301) laminiert;
**dadurch gekennzeichnet, dass**:
die Basisschicht (301) ein Pfropfcopolymer aus einem Polyacrylat und PVC als Hauptkomponente in der Zusammensetzung der Basisschicht umfasst.

2. Folie wie in Anspruch 1 beansprucht, wobei die Basisschicht (301) des Weiteren eines oder eine Kombination aus der folgenden Gruppen umfasst:
- zusätzliches PVC;
- eine UV-Lichtstabilisatorverbindung;
- eine Antioxidansverbindung auf Phenolbasis und eine UV-Lichtstabilisatorverbindung;
- eine Aminfängerverbindung und eine Antioxidansverbindung auf Phenolbasis und eine UV-Lichtstabilisatorverbindung;
- eine Wärmestabilisatorverbindung;
- eine acrylische Verarbeitungshilfsverbindung;
- eine Epoxidstabilisatorverbindung;
- eine Schmiermittelverbindung auf Esterbasis;
- eine Lichtstabilisatorverbindung auf Esterbasis.

3. Folie in Anspruch 2 beansprucht, wobei die Basisschicht (301) frei ist von monomeren und/oder polymeren Weichmachern.

4. Folie wie in Anspruch 2 beansprucht, wobei die unpigmentierte Basisschicht (301) umfasst:
- 50 bis 80 Gew.-% des Copolymers;
- 0,5 bis 2 Gew.-% der UV-Lichtstabilisatorverbindung;
- 0,2 bis 0,6 Gew.-% der Antioxidansverbindung auf Phenolbasis;
- 0,3 bis 1,0 Gew.-% der Aminfängerverbindung.

5. Folie wie in Anspruch 4 beansprucht, wobei die Basisschicht (301) des Weiteren 20 bis 30 Gew.-% PVC zusätzlich zu dem Copolymer umfasst.

6. Folie wie in einem der voranstehenden Ansprüche beansprucht, wobei die UV-Schutzschicht (302) auf Acrylbasis des Weiteren eine Mehrzahl verschiedener UV-Absorberverbindungen umfasst.

7. Folie wie in einem der voranstehenden Ansprüche beansprucht, wobei die UV-Schutzschicht auf Acrylbasis (302) des Weiteren mindestens eine Art von Sterisch-Gehindertes-Amin-Licht-Stabilisator-Verbindung (HALS) umfasst.

8. Folie wie in einem der voranstehenden Ansprüche beansprucht, wobei die Basisschicht (301) des Weiteren ein gedrucktes Design oder Muster, das durch die UV-Schutzschicht auf Acrylbasis (302) sichtbar ist, umfasst.

9. Folie wie in einem der voranstehenden Ansprüche beansprucht, wobei die Dicke der Basisschicht (301) größer ist als die Dicke der Schutzschicht auf Acrylbasis (302).

10. Fenster und/oder Rahmen, umfassend eine Folie gemäß einem der Ansprüche 1 bis 9.

11. Tür und/oder Türrahmen, umfassend eine Folie gemäß einem der Ansprüche 1 bis 9.

12. Wintergartenstrukturelement, umfassend eine Folie gemäß einem der Ansprüche 1 bis 9.

13. Gebäudestrukturelement, umfassend eine Folie gemäß einem der Ansprüche 1 bis 9.

14. Architekturzubehörteil, umfassend eine Folie gemäß einem der Ansprüche 1 bis 9.

15. Verfahren zur Herstellung einer flexiblen Verbundfolie zur Beschichtung eines Substrats (300), umfassend:
Bilden einer flexiblen Basisschicht (301) als eine hauptsächliche Komponente; und
Laminieren der Basisschicht (301) mit einer UV-Schutzschicht auf Acrylbasis (302), umfassend einen UV-Absorber, um eine flexible Verbundfolie zu bilden;
wobei die Basisschicht (301) ein Pfropfcopolymer aus einem Polyacrylat und PVC als Hauptkomponente in der Zusammensetzung der Basisschicht umfasst.

## Revendications

1. Film de stratifié flexible pour revêtir un substrat (300), le film comprenant :
principalement une couche de base (301) ; et
une couche protégeant contre les UV à base d'acrylique (302) comprenant un absorbeur UV et stratifiée avec la couche de base (301) ;
**caractérisé en ce que** :
la couche de base (301) comprend un copolymère greffé d'un polyacrylate et de PVC en termes de composition, en tant que composant principal de la couche de base.

2. Film selon la revendication 1, dans lequel la couche de base (301) comprend en outre l'un quelconque ou une combinaison de l'ensemble suivant consistant en :
• un PVC additionnel ;
• un composé stabilisant vis-à-vis de la lumière UV ;
• un composé antioxydant phénolique et un composé stabilisant vis-à-vis de la lumière UV ;
• un piégeur d'amine et un composé antioxydant phénolique et un composé stabilisant vis-à-vis de la lumière UV ;
• un composé stabilisant thermique ;
• un composé auxiliaire de traitement acrylique ;
• un composant stabilisant époxy ;
• un composant lubrifiant à base d'ester ;
• un composé stabilisant vis-à-vis de la lumière à base d'ester.

3. Film selon la revendication 2, dans lequel la couche de base (301) est exempte de plastifiants monomères et/ou polymères.

4. Film selon la revendication 2, dans lequel la couche de base (301), non pigmentée, comprend :
• 50 % à 80 % en poids du copolymère ;
• 0,5 % à 2 % en poids du composé stabilisant vis-à-vis de la lumière UV ;
• 0,2 % à 0,6 % en poids du composé antioxydant phénolique ;
• 0,3 % à 1,0 % en poids du composé piégeur d'amine.

5. Film selon la revendication 4, dans lequel la couche de base (301) comprend en outre 20 % à 30 % en poids de PVC en plus du copolymère.

6. Film selon l'une quelconque des revendications précédentes, dans lequel la couche protégeant contre les UV à base d'acrylique (302) comprend en outre plusieurs composés absorbant les UV différents.

7. Film selon l'une quelconque des revendications précédentes, dans lequel la couche protégeant contre les UV à base d'acrylique (302) comprend en outre au moins un type de composé stabilisant vis-à-vis de la lumière de type amine encombrée (HALS).

8. Film selon l'une quelconque des revendications précédentes, dans lequel la couche de base (301) comprend en outre un dessin ou motif imprimé visible à travers la couche protégeant contre les UV à base d'acrylique (302).

9. Film selon l'une quelconque des revendications précédentes, dans lequel l'épaisseur de la couche de base (301) est supérieure à l'épaisseur de la couche protectrice à base d'acrylique (302).

10. Fenêtre et/ou châssis comprenant un film selon l'une quelconque des revendications 1 à 9.

11. Porte et/ou huisserie comprenant un film selon l'une quelconque des revendications 1 à 9.

12. Elément structurel de véranda comprenant un film selon l'une quelconque des revendications 1 à 9.

13. Elément structurel d'immeuble comprenant un film selon l'une quelconque des revendications 1 à 9.

14. Accessoire architectural comprenant un film selon l'une quelconque des revendications 1 à 9.

15. Procédé de fabrication d'un film de stratifié flexible pour revêtir un substrat (300), comprenant les opérations consistant à :
former une couche de base flexible (301) en tant que composant principal ; et
stratifier la couche de base (301) avec une couche protégeant contre les UV à base d'acrylique (302) comprenant un absorbeur UV pour former un film de stratifié flexible ;
la couche de base (301) comprenant un copolymère greffé d'un polyacrylate et de PVC en termes de composition, en tant que composant principal de la couche de base.
